(19) Europäisches Patentamt

European Patent Office

Office européen des brevets

(11) EP 0 810 182 A1

(12) EUROPEAN PATENT APPLICATION

(43) Date of publication:
03.12.1997 Bulletin 1997/49

(51) Int. Cl.⁶: $C02F\ 3/10$, $C02F\ 3/34$

(21) Application number: 96830308.1

(22) Date of filing: 31.05.1996

(84) Designated Contracting States:
AT BE CH DE DK ES FR GB GR IE IT LI NL SE

(71) Applicant: ENEL S.p.A.
I-00198 Roma (IT)

(72) Inventors:
• Dinelli, Giorgio
72100 Brindisi (IT)
• Marchetti, Leonardo
72100 Brindisi (IT)

• Quattroni, Giuseppe
72100 Brindisi (IT)
• Fava, Fabio
40136 Bologna (IT)

(74) Representative:
Ferraiolo, Ruggero et al
FERRAIOLO S.r.l.,
Via Napo Torriani, 10
20124 Milano (IT)

(54) **Process for the biodegradation of polychlorobiphenyls and chlorobenzoic acids in contaminated waters**

(57) Convenient quantities of specialized bacteria in the state of cells immobilized on an inert immobilization material are confined within an environment in which defined quantities of biphenyl, air and contaminated water are continuously introduced in order to depurate the contaminated water.

Fig. 1

## Description

The present invention concerns a process for the biodegradation of polychlorobiphenyls and chlorobenzoic acids in contaminated waters, more especially a bio-technological process for the continuous aerobic treatment of waters contaminated by polychlorobiphenyls and chlorobenzoic acids.

The description herein will more simply state PCBs instead of polychlorobiphenyls and CBAs instead of chloro-benzoic acids.

Unfortunately, there are many sites in the water ecosystem contaminated by PCBs that, in the form of complex mixtures in process fluids, have been used for about 50 years (roughly from 1930 to 1980) in frequently "open" industrial processes; as a result many lakes, rivers and industrial waste-water accumulation basins, have been contaminated by these chemical products. The presence of PCBs in natural and industrial contaminated waters is in the order of a few mg/l, given the scarce solubility of PCBs in water. However the toxicity of PCBs is so high that these waters would also, by rule, require a de-contamination treatment.

We have no knowledge of technological solutions for the treatment of natural and industrial waters contaminated by PCBs; the greater part of these waters is not treated or, when they contain PCBs at high concentrations (PCB contamination is generally greater the greater the degree of organic materials and suspended materials is in the contaminated waters), they are gathered and treated in appropriate incinerators.

Natural and industrial waters contaminated by PCBs represent a particular environmental contaminated matrix; because, this matrix to be treated is of considerable dimensions and contains the pollutant to be removed in very low concentrations (2-10 mg/l). The matrix has very different characteristics, when not actually opposite compared to the more common PCB polluted matrixes (oils, heat-exchanger fluids and organic solvents) for which there are various treatment solutions available. Hence, more or less experimental processes employed in the treatment of matrixes polluted with PCBs (incineration, photo-degradation, hydrolytic reductive de-halogenation in presence of strong bases and nucleo-philes, etc.) are not adequate nor sufficiently effective and convenient in the treatment of natural and industrial waters contaminated by PCBs.

It has been understood that natural and industrial waters contaminated by PCBs can be advantageously treated by means of a bio-technological process that employs micro-organisms that we shall conventionally define - specialized micro-organisms - (more especially aerobic bacteria) that, when in contact with the contaminated waters are suited to a selective and complete removal of the small quantities of PCBs contained in them.

A group of known aerobic bacteria specialized in degrading PCBs in water systems is listed below as an example:

| Bacteria | Designation |
|---|---|
| *Achromobacter* sp. | BP,pCB |
| *Acinetobacter* sp. | P6,LS241 |
| *Alcaligenes* sp. | KF708,Y42,BM-2 |
| *Alcaligenes eutrophus* | H850 |
| *Alcaligenes faecalis* | Pi434 |
| *Arthrobacter* sp. | M5,B1B |
| *Corynebacterium* sp. | MB1 |
| *Pseudomonas* sp. | LB400,LB410,KF714,JB1 IS140,7509,WR912 |
| *Pseudomonas* sp. (*Acidovorans* gr.) | Pi939,H1130,Pi304,H702 Pi101 |
| *Pseudomonas cepacia* | H201,Pi704,RJB |
| *Pseudomonas paucimobilis* | Q1 |
| *Pseudomonas pseudoalcaligenes* | KF715,U083 |
| *Pseudomonas testosteroni* | H128,H336,H480 |
| (From: 1) Abramowich D.A., (1990) Critical reviews in Biotechnology, 10:241-251 - 2) Bedard D.L. (1990) in: Kamely D., Chakrabarty A., Omenn G.S. (eds) Biotechnology and Biodegradation. Portfolio Publishing Company, The Woodlands, Texas, p.p. 369 - 388). | |

It is understood that, without falling outside the scope of the invention, in addition to the bacteria listed, other specialized micro-organisms (bacteria, yeasts, fungi and molds) not included in the list or yet unknown, can be employed in the process proposed.

Notwithstanding the above said, and the availability of a fair number of specialized micro-organisms, to date no bio-technological processes for the treatment of basins of contaminated water are known; this depends on the fact that the process for the bio-degradation of these molecules is intrinsically extremely complex; in fact it requires that the waters to be treated contain: i) a special organic compound, biphenyl; ii) at least two types of bacteria, one suited to degrading PCBs and the other for degrading CBAs and other metabolites of the degradation process. The micro-biological removal of PCBs is therefore a process that requires very special conditions, that are difficult to realize in a traditional depuration plant or for an on-site treatment. In the latter case one would require the setup of solutions that ensure the confinement of the bacteria used within the waste-water basin to be purified.

The solution that characterizes the present invention is that of achieving the stable co-existence of at least two types of specialized micro-organisms required for the degradation of PCBs and CBAs in the state of immobilized cells on an inert immobilization material, within a confined environment, given defined quantities of biphenyl, air and the contaminated water to be treated.

A plant for the industrial realization of the process invented will comprise a cylindrical reactor packed with the inert immobilization material upon which said aerobic bacteria that are suited to mineralizing PCBs have been immobilized by adsorption. The reactor will be equipped with recycle, of a contaminated water delivery line and of a treated water discharge line. Both the recycle and the delivery lines will be equipped with finely adjustable delivery centrifuge pumps. The reactor will be fitted with an aeration line (a line that supplies compressed air to the system) that will also provide gaseous biphenyl to the biofilm. In the upper part of the reactor, along the gas emitting line, there will be a filter packed with Amberlite XAD-2 (a granular resin suited to ad(b)sorbing reverse PCBs) that has the precise function of capturing any PCBs exiting the bio-reactor together with the process discharge gases. Upstream the reactor there will be a storage tank for the water to be treated that, within the same, will be corrected for its pH, nitrogen and phosphorous content and small and well defined quantities of carbon sources will be added specifically for the bacteria immobilized in the reactor.

The immobilization material is preferably a mass of frosted glass-spheres or of poly-urethane foam cubes; also ceramic cylinders or spheres can be conveniently employed.

This solution allows the realization of some of the conditions essential to the bio-treatment: i) the obligated co-existence within the reaction environment of the two types of bacteria required for the mineralisation of PCBs and CBAs; ii) the scarce or nil diffusion of bacteria into the surrounding environment; iii) the availability of air and, above all, of biphenyl in the quantity required by the reaction environment.

The main advantages of the invention lie in its offering the opportunity to continuously treat waters contaminated with simple or complex mixtures of PCBs and CBAs and ensure their full degradation and dechlorinating of the PCBs and CBAs present in the contaminated waters. Therefore, the process can be advantageously exploited for the on-site treatment of natural and industrial waters contaminated by PCBs and CBAs; these could be gathered from the contaminated basin, treated continuously in an appropriate bio-reactor and hence accumulated in another basin or else re-introduced into the same basin. In our opinion this process is more effective and less costly than any other known or applied process in the treatment of environmental water matrixes contaminated with PCBs.

In "Applied Microbiology Biotechnology" (1993)40:541-548 and (1994) 41:117-123" F. Fava et al. described the following three bacteria, isolated in contaminated soil and later employed in the invented process:

- CPE1: *Pseudomonas* sp., an aerobic bacterium that can use biphenyl, 4-chlorobiphenyl, 4-chlorobenzoic acid and benzoate as sources of carbon and energy. CPE1 is able to completely degrade and dechlorinate 4-chlorobiphenyl and the 4-chlorobenzoic acid in batch culture.
- CPE2: *Pseudomonas* sp., an aerobic bacterium that can use as sources of carbon and energy and completely degrade the acids 2-chlorobenzoic and 2.5-dichlorobenzoic in batch culture.
- CPE3: *Alcaligenes* sp., an aerobic bacterium that can use as sources of carbon and energy and completely dechlorinate the acids 3-chlorobenzoic, 4-chlorobenzoic and 3.4-dichlorobenzoic in batch culture.
- while ECO3 defines a mixed culture of the above CPE1, CPE2, and CPE3 in equal parts (co-culture); this co-culture is able to effectively degrade and dechlorinate a wide range of PCBs in the presence of biphenyl in batch culture.

The following description is furnished with:

Fig. 1, a diagram of an apparatus realized in a laboratory,
Fig. 2, a diagram built up from a first experiment,
Fig. 3, a diagram built up from a second experiment and
Fig. 4, a diagram built up from a third experiment.

Having illustrated the three bacteria and their co-culture, a first detailed description of the invention is provided in the embodiment of a laboratory apparatus.

The cells from the co-culture ECO3, that, as is known, comprises a bacterium that degrades PCBs, CPE1, and two bacteria that degrade CBAs, CPE2 and CPE3, are immobilized on an inert support. The inert support used is frosted glass spheres (0.8 cm. diameter) set within a packed reactor equipped with recycle and with a line for the continuous feeding of air and biphenyl.

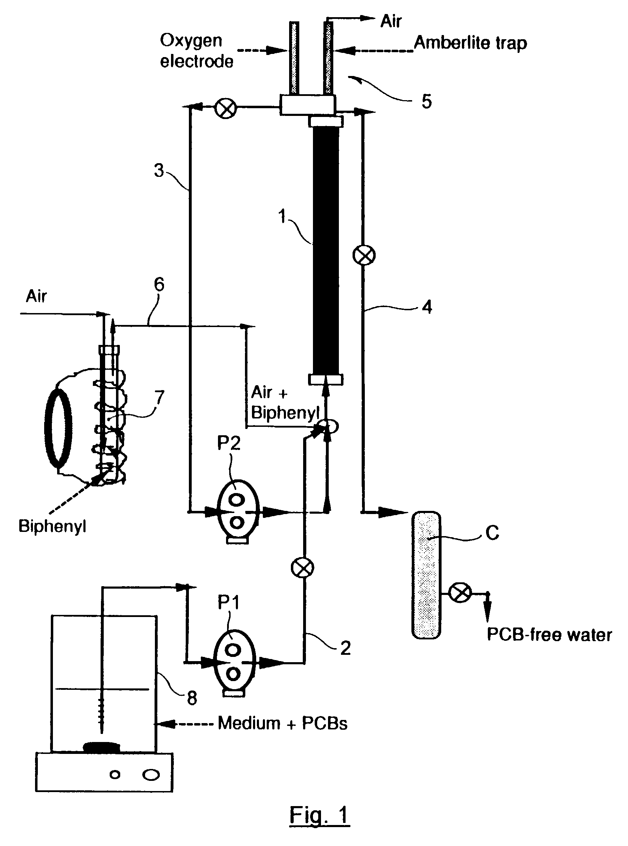

The schematic drawing of the laboratory apparatus created is shown in Figure 1.

The glass reactor 1 has an empty volume equal to 570 ml and comprises: a thermo-static system that is not illustrated in the figure (external jacket inside which thermo-static $H_2O$ at 28°C is circulated); lines 2, 3, respectively, for the loading of a PCB saturated mineral medium by the peristaltic pump P1 and for the recycling of medium by the peristaltic pump P2 and line 4 for the discharge of the treated water in a storage tank C of exiting water and, in its upper part, of an exhaust control system 5 consisting of a glass column (capacity 30 ml) with sinterized glass bottom filled with 5 g of Amberlite XAD-2 (granular resin suited to reverse ad(b)sorbing PCBs). Biphenyl, the source of carbon and indirectly the necessary substratum for bacterial biofilm maintenance, is introduced into the bio-reactor in the form of vapours through the aeration vent 6 that provides sterile air (pre-filtered air with 0.2 mm pore filtering); the biphenyl vapours are produced inside a glass cruet 7 (volume 50 ml) heated to 70°C where 5 g. of biphenyl crystals have been placed. The actual volume of the reactor, considering the volume of liquid occupied by the fixed bed (support) and by the air introduced into the system is about 340 ml. The mineral medium is contained in the tank 8 and saturated with simple or complex PCBs, containing 20 mg/l of 2-chlorobenzoic acid (2-CBA) and 20 mg/l of 3-chlorobenzoic (3-CBA) acid. The bioreactor is able to effectively decontaminate this polluted matrix in various working conditions.

A further detailed description of the invention is provided below showing the main results of the three experiments for the decontamination of waters containing PCBs and CBAs (of different kinds and at different concentrations) employing the bio-reactor described.

**1st experiment**

Synthetic contaminated water to be treated: synthetic water medium to which 2.5-dichlorobiphenyl (2.5-dCB), 3.4-dichlorobiphenyl (3.4-dCB) and 3.5-dichlorobiphenyl (3.5-dCB) and 20 mg/l of 2-CBA and 20 mg/l of 3-CBA. The actual concentration of the three PCBs in the medium entering the reactor was: 2.5-dCB = 0.512 mg/l, 3.4-dCB = 0.976 mg/l and 3.5-dCB = 0.524 mg/l. The delivery velocity (Va) was 0.20 ml/min, the volume of recycled volume (Vr) was 8.83 ml/min, and the recycle ratio (Rr=Va/Vr) was 0.976.

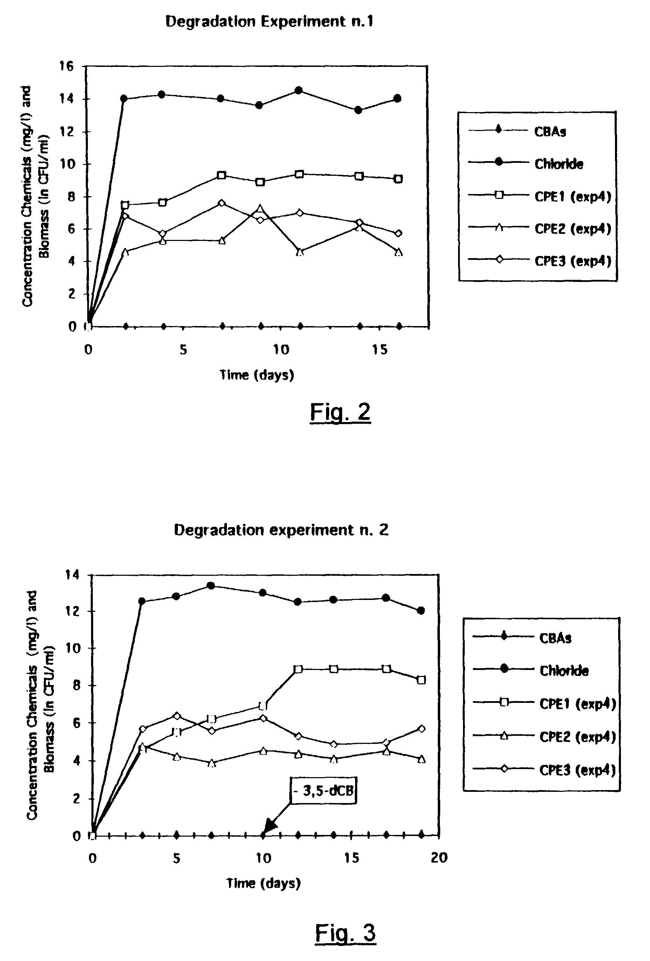

Figure 2 shows the variation in the concentration of specific biomass (concentration of each strain, CPE1, CPE2 and CPE3, of the co-culture), of the CBAs and of the chloride ions, (Last metabolites of the total degradation of the PCBs) in the reactor during the experiment in question. No PCBs were detected both in the Amberlite trap set in the reactor exhaust, and in the exhaust liquid exiting the reactor. The Table 1 below shows the balance of chlorine relative to the process being examined.

Table 1

| PCBs entering (mmoli) | CBAs entering (mmoli) | PCBs exiting (mmoli) | CBAs exiting (mmoli) | Total Ch. exiting (mmoli) | Treatment time (hours) | Volume of liquid treated (litres) |
|---|---|---|---|---|---|---|
| 2,5-dcB (0.0115) | 2-CBA (0.0115) | | | | | |
| 3,4-dCB (0.0218) | 3-CBA (0.637) | 0 | 0 | 1.666 | 408 | 4.97 |
| 3,5-dCB (0.0117) | | | | | | |

As can be seen in the figure, the three strains in ECO3 have remained at constant concentration in the reactor, immobilized on frosted glass spheres, and this has allowed that the PCBs introduced were degraded and dechlorinated effectively and completely (as can be seen by the absence of PCBs and CBAs and by the presence of stechiometric concentrations of chlorides in the exhaust water exiting the reactor - Table 1 - during the entire experiment period).

**2nd experiment**

Synthetic contaminated water to be treated: the synthetic water medium was prepared as described in the previous experiment. The actual concentration of the three PCBs in the medium entering the reactor was therefore: 2.5-dCB = 0.512 mg/l, 3.4-dCB = 0.976 mg/l, and 3.5-dCB = 0.524 mg/l. The Va and Vr increased by 20% compared to the values employed in the previous case were respectively: 0.240 ml/min, 10.600 ml/min, while the Rr, identical to the previous case was 0.976. The experiment was conducted in these conditions until the 10th day (1st stage). From the 11th to the 19th day the feed was deprived of the 3.5-dCB (2nd stage).

Figure 3 shows the variation in the concentration of the biomass of CPE1, CPE2 and CPE3, of the CBAs and of the chloride ions in the reactor during the first and second stages of the experiment in question. No PCBs were detected both in the Amberlite trap set in the reactor exhaust, and in the exhaust liquid exiting the reactor. Table 2 shows the balance of chlorine relative to the process in question.

Table 2

| 1st STAGE | | | | | | |
|---|---|---|---|---|---|---|
| PCBs entering (mmoli) | CBAs entering (mmoli) | PCBs exiting (mmoli) | CBAs exiting (mmoli) | Total Ch. exiting (mmoli) | Treatment time (hours) | Volume of liquid treated (litres) |
| 2,5-dCB (0.00797) | 2-CBA (0.443) | | | | | |
| 3,4-dCB (0.0152) | 3-CBA (0.443) | 0 | 0 | 1.332 | 240 | 3.46 |
| 3,5-dCB (0.00817) | | | | | | |

Table 2

| 2nd STAGE | | | | | | |
|---|---|---|---|---|---|---|
| PCBs entering (mmoli) | CBAs entering (mmoli) | PCBs exiting (mmoli) | CBAs exiting (mmoli) | Total Ch. exiting (mmoli) | Treatment time (hours) | Volume of liquid treated (litres) |
| 2,5-dCB (0.00717) | 2-CBA (0.398) | | | | | |
| 3,4-dCB (0.0137) | 3-CBA (0.398) | 0 | 0 | 0.937 | 216 | 3.11 |

As can be seen in the figure, also in this case the three strains of ECO3 remained at constant concentration within the reactor and, on the basis of the data related to the presence of PCBs and chloride ions in the exhaust liquids exiting the reactor (Table 2), the PCBs and CBAs introduced were completely degraded and dechlorinated during the experiment period. As can be seen from the figure the concentration of chloride ions decreases significantly at the beginning of the 2nd stage of the same as a result of the subtraction of 3.5-dCB from the feed.

**3rd experiment**

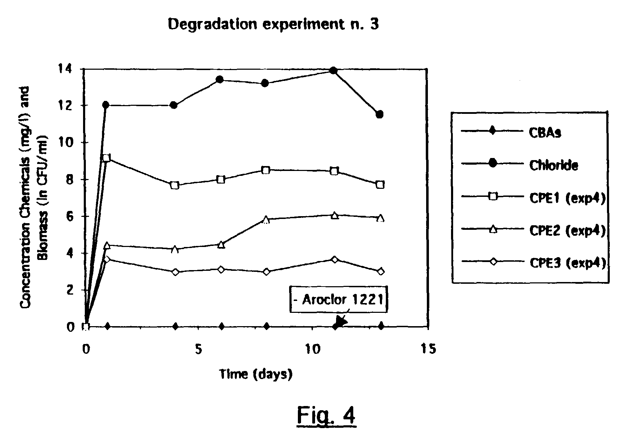

Synthetic contaminated water to be treated: synthetic water medium contaminated with Aroclor 1221 (a complex commercial mixture of mono, di, tri, and tetra-chlorinated biphenyls) 20 mg/l of 2-CBA and 20 mg/l and 3-CBA. The actual concentration of Aroclor 1221 in the feed was: 1.25 mg/l. Va, Vr and Rr kept identical to those employed in the previous case were respectively: 0.240 ml/min, 10.660 ml/min and 0.976 ml/min. Figure 4 shows the variation in the concentration of the biomass of CPE1, CPE2 and CPE3, of the CBAs and of the chloride ions in the reactor during the entire experiment. No PCBs were detected both in the Amberlite trap set in the reactor exhaust, and in the exhaust liquid exiting the reactor. Table 3 shows the balance of chlorine relative to the process in question.

Table 3

| PCBs entering (mmoli) | CBAs entering (mmoli) | PCBs exiting (mmoli) | CBAs exiting (mmoli) | Total Ch. exiting (mmoli) | Treatment time (hours) | Volume of liquid treated (litres) |
|---|---|---|---|---|---|---|
| Aroclor 1221 (0.024) | 2-CBA (0.481) | | | | | |
| | 3-CBA (0.481) | 0 | 0 | 1.197 | 260 | 3.75 |

As can be seen in the figure, also in this case the three strains of ECO3 remained at constant concentration within the reactor and, on the basis of the data related to the presence of PCBs and chloride ions in the exhaust liquids exiting the reactor (Table 3), the Aroclor 1221 and CBAs introduced into the reactor were completely degraded and dechlorinated during the experiment.

From the figure it can also be seen that the removal of Aroclor 1221 from the feed (on the 11th day) gave rise to a significant decrease in the concentration of chloride ions in the exhaust medium exiting.

**Claims**

1. Process for the biodegradation of polychlorobiphenyls and chlorobenzoic acids in contaminated waters by means of specialized bacteria and biphenyl **characterized** in that convenient quantities of specialized bacteria in the state of cells immobilized on an inert immobilization material are confined within an environment in which defined quantities of biphenyl, chlorobenzoic acids, air and contaminated water are continuously introduced in order to depurate the contaminated water.

2. Process according to claim 1 characterized in that the specialized bacteria are of at least two types, one able to degrade the polychlorobiphenyls and the other able to degrade the chlorobenzoic acids and the other metabolites.

3. Process according to claims 1 and 2 characterized in that the inert immobilization material is made up of frosted glass spheres.

4. Process according to claims 1 and 2 characterized in that the inert immobilization material is made up of spongy poly-urethane foam elements.

5. Process according to claims 1 and 2 characterized in that the inert immobilization material is made up of ceramic elements.

Fig. 1

**Degradation Experiment n.1**

## Fig. 2

**Degradation experiment n. 2**

## Fig. 3

Degradation experiment n. 3

Fig. 4

European Patent Office

**EUROPEAN SEARCH REPORT**

Application Number

EP 96 83 0308

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | PROGRESS IN BIOTECHNOLOGY 11, IMMOBILIZED CELLS: BASICS AND APPLICATIONS; PROC. OF AN INTERN. SYMPOSIUM OF THE WORKING PARTY ON APPLIED BIOCATALYSIS OF THE EUR. FED. OF BIOTECHNOLOGY, NOORDWIJKERHOUT-NL NOVEMBER 26-29, 1995; PUBL. ELSEVIER, 1996, AMSTERDAM, pages 750-756, XP002016236 FAVA, F. ET AL.: "Aerobic degradation and dechlorination of low-chlorinated biphenyls by immobilized cells of a PCB degrading bacterial co-culture" * the whole document * | 1-5 | C02F3/10 C02F3/34 |
| Y | ORGANIC MICRO POLLUTANTS IN THE AQUATIC ENVIRONMENT. PROCEEDINGS OF THE FOURTH EUROPEAN SYMPOSIUM UNDER AUSPICES OF THE COMMISSION OF THE EUROPEAN COMMUNITIES, VIENNA-AT, OCTOBER 22-24, 1985, PUBLISHER D. REIDEL PUBLISHING COMPANY , pages 331-335, XP002016237 PARSONS J.R. ET AL.: "Total biodegradation of chlorinated biphenyls by a pseudomonas strain" * the whole document * | 1-4 | |
| Y | DATABASE WPI Section Ch, Week 8839 Derwent Publications Ltd., London, GB; Class A97, AN 88-275336 XP002016238 & JP-A-63 202 382 (TAKUMA SOGO KENKYUS) , 22 August 1988 * abstract * | 5 | |

TECHNICAL FIELDS SEARCHED (Int.Cl.6)

C02F

The present search report has been drawn up for all claims

| Place of search | Date of completion of the search | Examiner |
|---|---|---|
| THE HAGUE | 17 October 1996 | Kaspers, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)